# EUROPÄISCHE PATENTSCHRIFT

(11) **EP 0 919 839 B1**
(45) Veröffentlichungstag und Bekanntmachung des Hinweises auf die Patenterteilung: **10.10.2001**
(21) Anmeldenummer: 97120912.7
(22) Anmeldetag: 28.11.1997
(51) Int. Cl.: G01V 8/10, B62B 3/14

(54) **Verfahren zur Erfassung der räumlichen Bewegungen von Einkaufshilfen in einem Verkaufsraum**
Method for detecting the spatial movements of shopping-aids in a shopping area
Procédé de détection des mouvements dans l'espace des aides d'achat dans un lieu de vente

(43) Veröffentlichungstag der Anmeldung: 02.06.1999
(73) Patentinhaber: SCHEIDT & BACHMANN GMBH, D-41238 Mönchengladbach (DE)
(72) Erfinder: Miller, Norbert Dr., 41063 Mönchengladbach (DE)
(74) Vertreter: Stenger, Watzke & Ring Patentanwälte

(56) Entgegenhaltungen:
- EP-A- 0 435 225
- EP-A- 0 788 248
- WO-A-93/04449
- DE-C- 19 529 456

## Beschreibung

Die Erfindung betrifft ein Verfahren zur Erfassung der räumlichen Bewegungen der Einkaufshilfen, insbesondere Einkaufswagen in einem Verkaufsraum, insbesondere eines Selbstbedienungsmarktes.

Die Erfassung von Bewegungsdaten der Kundenströme in Selbstbedienungsmärkten ist für Marketing- und Verkaufsstrategien von großer Bedeutung, wie aus den Patentschriften EP-A-0 435 225, DE-A-19 529 456, EP-A-0 788 248 und der internationelen Anmeldung WO-A-9 304 449 zu ersehen ist. Durch die Erfassung der von den Kunden hauptsächlich benutzten Wege ist es möglich, Verkaufsstände für neu auf dem Markt zu plazierende Produkte entlang dieser Wege aufzustellen, um das neue Produkt bestmöglich einem breiten Kundenkreis zu präsentieren. Darüber hinaus ist es möglich, die erfaßten Bewegungsdaten zur Raumaufteilung der einzelnen Regalreihen in dem Selbstbedienungsmarkt heranzuziehen, um Engpässe und Toträume zu vermeiden.

Aus der Praxis ist es beispielsweise bekannt, das Kaufverhalten sowie die Hauptbewegungen der Kunden innerhalb eines Supermarktes mit Videokameras aufzuzeichnen und auszuwerten. Diese Erfassung der Bewegungsdaten mittels einer Videokamera hat einerseits den Nachteil, daß die Aufzeichnung nachträglich oder während der Aufnahme von Bedienungspersonal ausgewertet werden muß. Darüber hinaus ist eine lückenlose Erfassung der gesamten Fläche eines Selbstbedienungsmarktes nur mit einem hohen Aufwand an Videokameras möglich, da die einzelnen Verkaufsstände und Regale die Einsicht in einzelne Gänge verhindern.

Der Erfindung liegt die **Aufgabe** zugrunde, ein Verfahren zur Erfassung der räumlichen Bewegungen der Einkaufshilfen in einem Verkaufsraum zu schaffen, das mit einfachen Mitteln eine gleichmäßige, lückenlose und im wesentlichen vollautomatische Erfassung der Bewegungsdaten der Einkaufshilfen ermöglicht.

Die **Lösung** dieser Aufgabenstellung durch die Erfindung ist gekennzeichnet durch die Erfassung nach Anspruch 1 der räumlichen Bewegungen der Einkaufshilfen. Vorteilhafte Ausführungen sind den abhängigen Ansprüchen zu entnehmen.

Mit dieser erfindungsgemäßen Anordnung von ortsfest über den Verkaufsraum verteilten Sendern und an jeder Einkaufshilfe angeordneten Empfängern und nachgeordneten Speichern ist es möglich, die Wege einzelner Verkaufshilfen individuell nachzuverfolgen. Die Plazierung der Empfänger an den Einkaufshilfen hat darüber hinaus den Vorteil, daß die einen nur sehr geringen Energiebedarf benötigenden Empfänger klein ausgebildet und somit platzsparend an der Einkaufshilfe angeordnet werden können, ohne den Kunden zu behindern.

Gemäß einem weiteren Merkmal wird vorgeschlagen, die von den ortsfesten Sendern ausgesandten Signale nach ihrem Empfang zu Datensätzen zu verarbeiten und in den Speichern der Einkaufshilfen zu speichern. Durch diese zusätzliche Umsetzung der Signale in leichter zu verarbeitende Datensätze ist es möglich, diese von den ortsfesten Sendern empfangenen Signale mit zusätzlichen Signalen und/oder Informationen zu Auswerte- und Vergleichszwecken zu kombinieren.

Um nicht nur die bloße Bewegungsbahn der überwachten Einkaufshilfe zu erfassen, wird weiterhin vorgeschlagen, daß zusätzlich zu der Erfassung der räumlichen Positionen der Einkaufshilfe deren räumliche und zeitliche Bewegungsvektoren erfaßt werden. Diese zusätzliche Erfassung ermöglicht eine exakte Analyse und Interpretation nicht nur des beim Einkauf im Verkaufsraum zurückgelegten Weges, sondern auch der für den Einkauf benötigten Zeit.

Da die ortsfesten Sender Signale vorzugsweise in vorgegebenen Zeitintervallen aussenden, wird gemäß einer weiteren Ausführungsform der Erfindung vorgeschlagen, daß der Mehrfachempfang von Signalen desselben Senders in speicherbare Verweildauerinformationen umgesetzt wird. Auf diese Weise wird sichergestellt, daß beim Abstellen eines Einkaufswagens in einer Überwachungszone des Verkaufsraums der Speicher des an der Verkaufshilfe angeordneten Empfängers nicht vollständig mit den den immer gleichen Signalen desselben Senders vollgeschrieben wird. Stattdessen ist der Verweildauerinformation beispielsweise zu entnehmen, wie oft hintereinander dasselbe Signal von demselben Sender empfangen wurde, so daß aus der vorgegebenen Intervallfrequenz, in der die Signale von den ortsfesten Sendern ausgesandt werden, die Verweildauer der Verkaufshilfe in dem jeweiligen Überwachungsbereich ermittelt werden kann.

Gemäß einer praktischen Ausführungsform der Erfindung erfolgt die Übertragung der Signale der Sender an die Speicher mittels Infrarot-Technik. Die Infrarot-Technik hat sich für die Übertragung der Signale zwischen Sender und Empfänger als vorteilhaft erwiesen, da die Verwendung von Funktechnik im Hochfrequenzbereich in einer Umgebung von Metallregalen aufgrund von Reflexionen und dem damit verbundenen unvorhersehbaren Funkausbreitungsverhalten sehr problematisch ist, gesundheitsgefährdend sein kann und genehmigungspflichtig ist.

Weiterhin wird mit der Erfindung vorgeschlagen, daß die in den Empfängern der einzelnen Einkaufshilfen gespeicherten Signale beim Verlassen des Verkaufsraums, vorzugsweise im Kassenbereich an eine Auswerteeinrichtung übertragen werden. Durch dieses Aufstellen von Auswerteeinrichtungen im Ausgangsbereich des Verkaufsraums ist es möglich, die in dem Empfänger gespeicherten Signale automatisch beim Verlassen des Verkaufsraums aus dem Speicher des Empfängers auszulesen und auszuwerten. Da gerade die Verknüpfung der erfaßten Bewegungsdaten mit den zugehörigen Warendaten für Marketing- und Verkaufszwecke besonders wichtig und interessant ist, werden gemäß einer praktischen Ausführungsform des erfindungsgemäßen Verfahrens der Auswerteeinrichtung zugleich mit der erfaßten Bewegung der Einkaufshilfe die durch die Kasse ermittelten artikelbezogenen Einkaufsdaten übertragen. Somit kann im Nachhinein festgestellt werden, ob der jeweilige Kunde direkt die von ihm eingekauften Waren angefahren hat oder aber den Einkaufswagen an einer für ihn günstigen Stelle abgestellt hat, um dann die Waren einzeln von ihrem jeweiligen Stellplatz zu holen.

Die Übertragung der in den Speichern gespeicherten Daten an die Auswerteeinrichtung kann mittels Funk- oder Infrarot-Technik erfolgen. Bei dieser Übertragung ist auch die Funk-Technik ein geeignetes Übertragungsmedium, da die mit dem Empfänger versehene Einkaufshilfe nahe an der Auswerteeinrichtung vorbeigeführt wird, weshalb es in diesem Fall nicht zu den unerwünschten Streu- und Reflexionserscheinungen kommen kann.

Gemäß einer weiteren Ausführungsform der Erfindung werden die Speicher der Einkaufshilfen vorzugsweise nach jedem Kassiervorgang und nach der Übertragung ihrer Daten an die Auswerteeinheit gelöscht. Auf diese Weise steht der Speicher jeder Einkaufshilfe nach der Übertragung der Daten an die Auswerteeinheit für einen neuen Erfassungsvorgang zur Verfügung. Selbstverständlich ist es auch möglich, die Datensätze mehrerer Einkaufsvorgänge hintereinander im Speicher zu speichern. Beim Verlassen des Verkaufsraums ist es bei dieser Ausführungsform vorteilhaft, wenn über die Auswerteeinheit ein Signal gespeichert wird, welches das Ende eines jeden vollständigen Verkaufsvorgangs abschließt. Die Daten der einzelnen Verkaufsvorgänge können dann beispielsweise einmal am Tag über eine Auswerteeinheit ausgelesen werden.

Um mit möglichst wenig Sendern eine gleichmäßige Abdeckung des gesamten Verkaufsraums zu erzielen, ist es vorteilhaft, die Sender im Bereich der Decke des Verkaufsraums anzuordnen. Bei dieser Anordnung der Sender an der Decke des Verkaufsraums ist es auf einfache Weise möglich, den gesamten Verkaufsraum in einzelne Überwachungsbereiche zu unterteilen.

Gemäß einer praktischen Ausführungsform der Erfindung wird vorgeschlagen, daß der an jeder Einkaufshilfe angeordnete Speicher mit zugehörigem Empfänger als Transponder, insbesondere Schreib-Lese-Transponder, mit Verarbeitungsfähigkeit der empfangenen Signale ausgebildet ist. Die Verwendung von Transpondern hat den Vorteil, daß diese von der Bauart klein und unempfindlich sind, so daß sie auch bei der Anordnung an einem Einkaufswagen oder Einkaufskorb einerseits nicht stören und andererseits keinen hohen Wartungs- und Serviceaufwand benötigen. Darüber hinaus ist der Energiebedarf der Transponder mit Verarbeitungsfähigkeit sehr gering, so daß kleine Batterien zur Energieversorgung ausreichend sind.

Schließlich wird vorgeschlagen, daß mittels der Auswerteeinrichtung für auswählbare Zeitabschnitte Protokolle der Bewegungen sämtlicher Verkaufshilfen, vorzugsweise unter Einschluß der artikelbezogenen Einkaufsdaten erstellt werden.

Weitere Merkmale und Vorteile der Erfindung ergeben sich aus der nachfolgenden Beschreibung der zugehörigen Zeichnung, in der schematisch die Draufsicht auf den Verkaufsraum eines Selbstbedienungsmarktes dargestellt ist.

In dem dargestellten Verkaufsraum 1 sind eine Mehrzahl von Regalen oder Verkaufshilfen 2 angeordnet, in denen die Waren zum Kauf bereitliegen. An der Decke des Verkaufsraumes 1 sind eine Mehrzahl von ortsfesten Sendern 3 derart angeordnet, daß sie den Verkaufsraum in mehrere Überwachungsbereiche I bis VI unterteilen. Im dargestellten Ausführungsbeispiel ist der Verkaufsraum 1 in sechs Überwachungsbereiche I bis VI unterteilt, wobei in jedem Überwachungsbereich I bis VI jeweils zwei ortsfeste Sender 3 an der Decke plaziert sind. Die Sendeleistung der einzelnen Sender 3 ist dabei so bemessen, daß sich die einzelnen Sender 3 nebeneinanderliegender Überwachungsbereiche nicht oder kaum überschneiden.

Der Betrieb des Verfahrens zur Erfassung der räumlichen Bewegung einer Einkaufshilfe 4 erfolgt folgendermaßen:

Ausgehend von einem Eingang 1a des Verkaufsraums 1 führt der Kunde die im dargestellten Ausführungsbeispiel als Einkaufswagen ausgebildete Einkaufshilfe 4 entlang der Regale bzw. Verkaufshilfen 2 durch den Verkaufsraum 1. Jede Einkaufshilfe 4 ist mit einem Empfänger 5 versehen, der fest mit der Einkaufshilfe 4 verbunden ist. Alle Sender 3 desselben Überwachungsbereiches I bis VI senden in vorgegebenen Zeitintervallen dieselben Signale aus. Diese von den ortsfesten Sendern 3 ausgesandten Signale werden von den Empfängern 5 empfangen und/oder zu Datensätzen verarbeitet und in den Empfängern 5 nachgeordneten Speichern 6 gespeichert. Beim Durchfahren des Verkaufsraumes 1 entlang der einzelnen Regale bzw. Verkaufshilfen 2 werden nach und nach die Signale unterschiedlicher Überwachungsbereiche I bis VI vom Empfänger 5 empfangen und im Speicher 6 abgespeichert.

Um zu verhindern, daß der Speicher 6 einer für längere Zeit in einem Überwachungsbereich I bis VI abgestellten Einkaufshilfe 4 mit den immer wiederkehrenden gleichen Signalen desselben Senders 3 dieses Überwachungsbereiches I bis VI überladen wird, wird die Mehrfachaufzeichnung gleicher Sendersignale in eine speicherplatzsparende Verweildauerinformation umgesetzt, der nachträglich zu entnehmen ist, wie oft das Sendesignal ohne Unterbrechung hintereinander empfangen wurde. Aus der Anzahl dieser empfangenen Signale sowie der bekannten Intervallfrequenz läßt sich somit auf einfache Weise die Verweildauer der Einkaufshilfe 4 in dem jeweiligen Überwachungsbereich I bis VI ermitteln.

Zum Auswerten der in dem Speicher 6 der Einkaufshilfen 4 gespeicherten Daten sind bei dem dargestellten Ausführungsbeispiel im Bereich von Kassen 7 Auswerteeinrichtungen 8 angeordnet, an die beim Verlassen des Verkaufsraumes 1 die in dem Speicher 6 der Einkaufshilfe 4 gespeicherten Daten übertragen werden.

Um eine direkte Verbindung zwischen dem von der Einkaufshilfe 4 zurückgelegten Weg durch den Verkaufsraum 1 zu den gekauften Waren herstellen zu können, werden zugleich mit der Übertragung der erfaßten Bewegungsdaten die durch die Kasse 7 ermittelten artikelbezogenen Einkaufsdaten an die Auswerteeinrichtung 8 übermittelt.

Während die Übertragung der Signale von den Sendern 3 zu den Empfängern 5 vorteilhafterweise mittels Infrarot-Technik erfolgt, um funktechnische Probleme in der Umgebung von Metallregalen auszuschließen, ist es möglich, daß die Übertragung von den Speichern 6 an die Auswerteeinrichtungen 8 mittels Infrarot- oder Funk-Technik erfolgt, da auf dieser kurzen Distanz zwischen Einkaufshilfe 4 und Auswerteeinrichtung 8 keine Reflexionen oder anderweitige Funkstörungen zu befürchten sind.

Mit dem vorgestellten Verfahren ist es somit möglich, vollautomatisch den Bewegungsablauf und insbesondere auch räumliche und zeitliche Bewegungsvektoren einzelner Einkaufshilfen 4 zu verfolgen und durch die Kopplung der Kassen 7 mit Auswerteeinrichtungen 8 zusätzlich zu den Bewegungsdaten eine entsprechende kaufproduktbezogene Information zu erhalten.

### Bezugszeichenliste

- 1: Verkaufsraum
- 1a: Eingang
- 2: Regal bzw. Verkaufshilfe
- 3: Sender
- 4: Einkaufshilfe
- 5: Empfänger
- 6: Speicher
- 7: Kasse
- 8: Auswerteeinrichtung

- I: Überwachungsbereich
- II: Überwachungsbereich
- III: Überwachungsbereich
- IV: Überwachungsbereich
- v: Überwachungsbereich
- VI: Überwachungsbereich

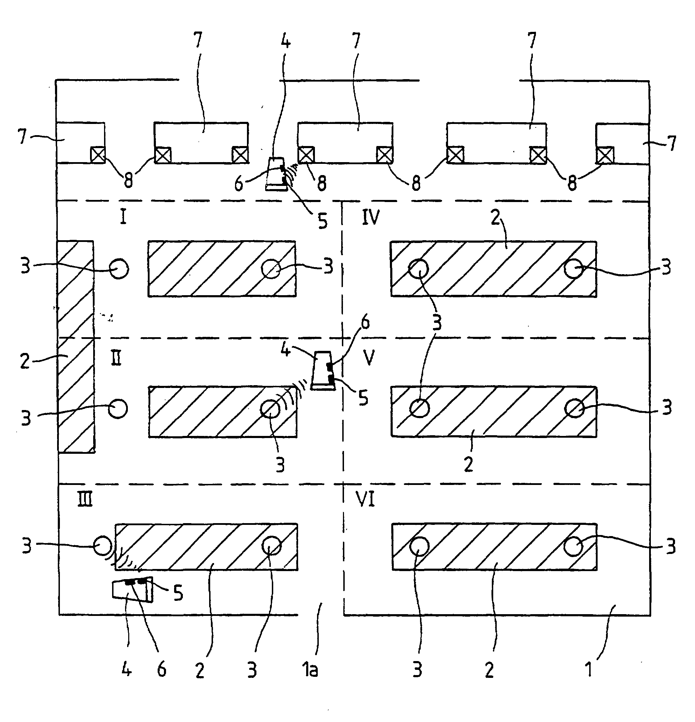

## Patentansprüche

1. Verfahren zur Erfassung der räumlichen Bewegungen der Einkaufshilfen, insbesondere Einkaufswagen, in einem Verkaufsraum, insbesondere eines Selbstbedienungsmarktes, wobei die durch eine Mehrzahl über den Verkaufsraum (1) verteilter Sender (3) gesendeten, der jeweiligen Senderposition zugeordneten Signale in einem an jeder Einkaufshilfe (4) angeordneten, einem Empfänger (5) nachgeordneten Speicher (6) gespeichert werden,
**dadurch gekennzeichnet,**
**daß** beim Verlassen des Verkaufsraumes (1), vorzugsweise im Kassenbereich, die in den Speichern (6) jeder Einkaufshilfe (4) gespeicherten Daten an eine Auswerteeinrichtung (8) übertragen werden.

2. Verfahren nach Anspruch 1, **dadurch gekennzeichnet, daß** der Auswerteeinrichtung (8) zugleich mit der erfaßten Bewegung der Einkaufshilfe (4) die durch die Kasse (7) ermittelten artikelbezogenen Einkaufsdaten übertragen werden.

3. Verfahren nach Anspruch 1 oder 2, **dadurch gekennzeichnet, daß** die Übertragung der in den Speichern (6) gespeicherten Daten an die Auswerteeinrichtung (8) mittels Funk- oder Infrarot-Technik erfolgt.

4. Verfahren nach einem der voranstehenden Ansprüche, **dadurch gekennzeichnet, daß** die von den ortsfesten Sendern (3) ausgesandten Signale nach ihrem Empfang zu Datensätzen verarbeitet und in den Speichern der Einkaufshilfen (4) gespeichert werden.

5. Verfahren nach einem der voranstehenden Ansprüche, **dadurch gekennzeichnet, daß** zusätzlich zur Erfassung der räumlichen Positionen der Einkaufshilfe (4) deren räumliche und zeitliche Bewegungsdaten erfaßt werden.

6. Verfahren nach einem der voranstehenden Ansprüche, **dadurch gekennzeichnet, daß** der Mehrfachempfang von Signalen desselben Senders (3) in speicherbare Verweildauerinformationen umgesetzt wird.

7. Verfahren nach einem der voranstehenden Ansprüche, **dadurch gekennzeichnet, daß** die Übertragung der Signale der Sender (3) an die Empfänger (5) mittels Infrarot-Technik erfolgt.

8. Verfahren nach einem der voranstehenden Ansprüche, **dadurch gekennzeichnet, daß** die Speicher (6) der Einkaufshilfen (4) vorzugsweise nach jedem Kassiervorgang und nach der Übertragung ihrer Daten an die Auswerteeinrichtung (8) gelöscht werden.

9. Verfahren nach einem der voranstehenden Ansprüche, **dadurch gekennzeichnet, daß** die Sender (3) im Bereich der Decke des Verkaufsraumes (1) angeordnet sind.

10. Verfahren nach einem der voranstehenden Ansprüche, **dadurch gekennzeichnet, daß** der an jeder Einkaufshilfe (4) angeordnete Speicher (6) mit zugehörigem Empfänger als Transponder, insbesondere Schreib-Lese-Transponder mit Verarbeitungsfähigkeit der empfangenen Signale ausgebildet ist.

11. Verfahren nach einem der voranstehenden Ansprüche, **dadurch gekennzeichnet, daß** durch die ortsfesten Sender (3) Signale in vorgegebenen Zeitintervallen ausgesandt werden.

12. Verfahren nach einem der voranstehenden Ansprüche, **dadurch gekennzeichnet, daß** mittels der Auswerteeinrichtung (8) für auswählbare Zeitabschnitte Protokolle der Bewegungen sämtlicher Einkaufshilfen (4), vorzugsweise unter Einschluß der artikelbezogenen Einkaufsdaten, erstellt werden.

## Claims

1. Method for detecting the spatial movements of the shopping aids, in particular shopping trolleys, in a sales area, in particular in a self-service market, where the signals which are transmitted by a plurality of transmitters (3) distributed over the sales area (1) and are associated with the respective transmitter position are stored in a memory (6) which is arranged on each shopping aid (4) and is arranged downstream of a receiver (5), **characterized**
**in that**, upon leaving the sales area (1), preferably in the checkout area, the data stored in the memories (6) on each shopping aid (4) are transmitted to an evaluation device (8).

2. Method according to Claim 1, **characterized in that** the item-related shopping data ascertained by the checkout (7) are transmitted to the evaluation device (8) at the same time as the detected movement of the shopping aid (4).

3. Method according to Claim 1 or 2, **characterized in that** the data stored in the memories (6) are transmitted to the evaluation device (8) using radio or infrared technology.

4. Method according to one of the preceding claims, **characterized in that** the signals transmitted by the stationary transmitters (3), once received, are processed to form data records and are stored in the memories on the shopping aids (4).

5. Method according to one of the preceding claims, **characterized in that**, in addition to the spatial positions of the shopping aid (4) being detected, the spatial and temporal movement data thereof are detected.

6. Method according to one of the preceding claims, **characterized in that** multiple reception of signals from the same transmitter (3) is converted into storable time-spent information.

7. Method according to one of the preceding claims, **characterized in that** the signals from the transmitters (3) are transmitted to the receivers (5) using infrared technology.

8. Method according to one of the preceding claims, **characterized in that** the memories (6) on the shopping aids (4) are preferably erased after each checkout operation and after their data have been transmitted to the evaluation device (8).

9. Method according to one of the preceding claims, **characterized in that** the transmitters (3) are arranged in the area of the ceiling of the sales area (1).

10. Method according to one of the preceding claims, **characterized in that** the memory (6) arranged on each shopping aid (4) and having an associated receiver is in the form of a transponder, in particular a read/write transponder with the ability to process the signals received.

11. Method according to one of the preceding claims, **characterized in that** the stationary transmitters (3) transmit signals at prescribed time intervals.

12. Method according to one of the preceding claims, **characterized in that** the evaluation device (8), is used to create records of the movements of all shopping aids (4), preferably with the inclusion of the item-related shopping data, for selectable time periods.

## Revendications

1. Procédé destiné à la détection des déplacements dans l'espace des auxiliaires d'achat, notamment de chariots d'achat, dans un espace de vente, notamment un supermarché libre-service, les signaux associés à la position respective d'émetteur émis par plusieurs émetteurs (3) répartis dans l'espace de vente (1) étant mémorisés dans une mémoire (6) disposée sur chaque auxiliaire d'achat (4) en aval d'un récepteur (5),
**caractérisé en ce que**,
lors de la sortie de l'espace de vente (1), de préférence dans la zone des caisses, les données mémorisées dans les mémoires (6) de chaque auxiliaire d'achat (4) sont transmises à un dispositif d'évaluation (8).

2. Procédé selon la revendication 1, **caractérisé en ce que** les données d'achat relatives aux articles enregistrés par la caisse (7) sont transmises au dispositif d'évaluation (8) simultanément avec le déplacement détecté de l'auxiliaire d'achat (4).

3. Procédé selon la revendication 1 ou 2, **caractérisé en ce que** les données mémorisées dans les mémoires (6) sont transmises au dispositif d'évaluation (8) au moyen de technique radio ou infrarouge.

4. Procédé selon l'une quelconque des revendications précédentes, **caractérisé en ce que** les signaux émis par les émetteurs fixes (3) sont transformés en blocs de données après leur réception, et sont mémorisés dans les mémoires des auxiliaires d'achat (4).

5. Procédé selon l'une quelconque des revendications précédentes, **caractérisé en ce que**, outre la détection des positions dans l'espace des auxiliaires d'achat (4), les données de déplacement dans l'espace et dans le temps de ces derniers sont détectées.

6. Procédé selon l'une quelconque des revendications précédentes, **caractérisé en ce que** la réception multiple de signaux du même émetteur (3) est convertie en informations de durée de séjour pouvant être mémorisées.

7. Procédé selon l'une quelconque des revendications précédentes, **caractérisé en ce que** les signaux des émetteurs (3) sont transmis aux récepteurs (5) au moyen de technique infrarouge.

8. Procédé selon l'une quelconque des revendications précédentes, **caractérisé en ce que** les mémoires (6) des auxiliaires d'achat (4) sont effacées, de préférence après chaque processus d'encaissement, et après la transmission de leur données au dispositif d'évaluation (8).

9. Procédé selon l'une quelconque des revendications précédentes, **caractérisé en ce que** les émetteurs (3) sont disposés dans la zone du plafond de l'espace de vente (1).

10. Procédé selon l'une quelconque des revendications précédentes, **caractérisé en ce que** la mémoire (6) avec récepteur associé disposée sur chaque auxiliaire d'achat (4) est réalisée en tant que transpondeur, notamment de transpondeur d'enregistrement et de lecture pouvant traiter les signaux reçus.

11. Procédé selon l'une quelconque des revendications précédentes, **caractérisé en ce que** les émetteurs fixes (3) émettent des signaux à intervalles de temps prédéterminés.

12. Procédé selon l'une quelconque des revendications précédentes, **caractérisé en ce que** des protocoles des déplacements de tous les auxiliaires d'achat (4), incluant de préférence les données d'achat relatives aux articles, sont établis au moyen du dispositif d'évaluation (8) pour des laps de temps pouvant être choisis.
